# EUROPEAN PATENT APPLICATION

(11) **EP 0 816 239 A1**
(43) Date of publication of application: **07.01.1998**
(21) Application number: 97610027.1
(22) Date of filing: 01.07.1997
(51) Int. Cl.: B65D 5/56, B31B 7/00

(54) **Packaging container and tool for the manufacture thereof**

(30) Priority: 03.07.1996 DK 9600234 U
(71) Applicant: Danapak A/S, 2840 Holte (DK)
(72) Inventor: Weidner, Tom, 2840 Holte (DK)
(74) Representative: Larsen, Hans Ole

(57) **Abstract**

In order to simlify the production of a packaging tub, which consists of a carton container (2) with an inner plastic lining (3), according to the invention the plastic foil is expanded to extend around the upper edge (6) of the carton tub and a distance (5) down on the outer side.

The sides of the carton tub (2) are hereby held together entirely without the use of adhesives for the securing of the tub, and moreover the tub is given a considerable stability.

Upon separation of the carton part from the plastic part with the view to sorting, the parts can easily be separated by a small mutual displacement, whereby the upper edge (6) of the carton tub is released from the bent over plastic.

The production of this tub (1) can with advantage be carried out in a tool with a cleft (14), in which the bent over piece (5) of the plastic can be formed.

## Description

### Prior art technique

The invention concerns a packaging tub comprising an outer carton container and an inner lining of plastic, which at the top forms an edge on which a lid can be placed.

Tubs of this kind are used to a great extent for the packaging of food products such as butter, salads etc., partly because they are easy to handle during the filling, but also because of their good application characteristics and the possibility of separation with the view to their reuse.

The tubs are produced by being punched out from a sheet of carton and being formed into tubs by bending the four side pieces upwards in relation to the bottom.

In order to maintain the shape of the tub, the overlapping parts of the side pieces must then be glued to the underlying parts. This is normally effected by means of wax or similar heat-fusible materials.

However, this is both a troublesome and time-consuming process, which also requires adhesives which have to be removed in the recycling process. Therefore, efforts are made to avoid this process by means of an assembly technique whereby the foil is used to hold the carton parts together in connection with the plastic lining.

This, however, requires the punching out of various holes in the carton part, into which the foil can penetrate and adhere.

This simplifies the production, but has the disadvantage that the inside of the tub can not be completely plane, and the desired separation of the carton and the plastic part after use becomes rather difficult due to this adherence.

### Advantages of the invention

It is the object of the invention to remedy these drawbacks, and this is achieved by means of a packaging tub according to the invention, where the plastic lining extends around the upper edge of the carton tub and a distance down on its outer side.

The problem with the holding together and the subsequent separation of the parts is hereby solved in a surprisingly simple manner.

The carton part does not require any sticking together, the reason being that the holding together is effected by means of foil around the upper edge of the carton tub, and the subsequent separation of the parts can be carried out easily and without problems, in that the carton part can be released from the plastic part by a gentle pull. There are hereby achieved advantages from the production point of view as well as good recycling characteristics.

As disclosed in claim 2, by using a commonly-known plastic foil and forming it so that it extends over the edge of the carton tub, both materials and production methods can be used for the manufacture of the tub.

As disclosed in claim 3, by letting the plastic extend some millimeters down on the outer side of the carton tub, a suitable adherence with possibility of separation is achieved.

Finally, as disclosed in claims 4 and 5, it is expedient to produce the tub in a tool configured with a cleft or a crevice, in that in a simple manner in the same operation there can hereby be formed a plastic lining which surrounds the upper edge of the carton tub.

### The drawing

In the following, the invention will be described in more detail with reference to the drawing, where
- fig. 1: shows a section of an example of a finished packaging tub according to the invention,
- fig. 2: shows a cross-section through the edge area of the packaging tub,
- fig. 3: shows a cross-section through a tool for the production of the formed carton tub,
- fig. 4: shows a section of the tool shown in fig. 3.
- fig. 5: shows this section with plastic foil inserted, and
- fig. 6: shows a section of the tool during the forming of the plastic part.

### Description of the example embodiment

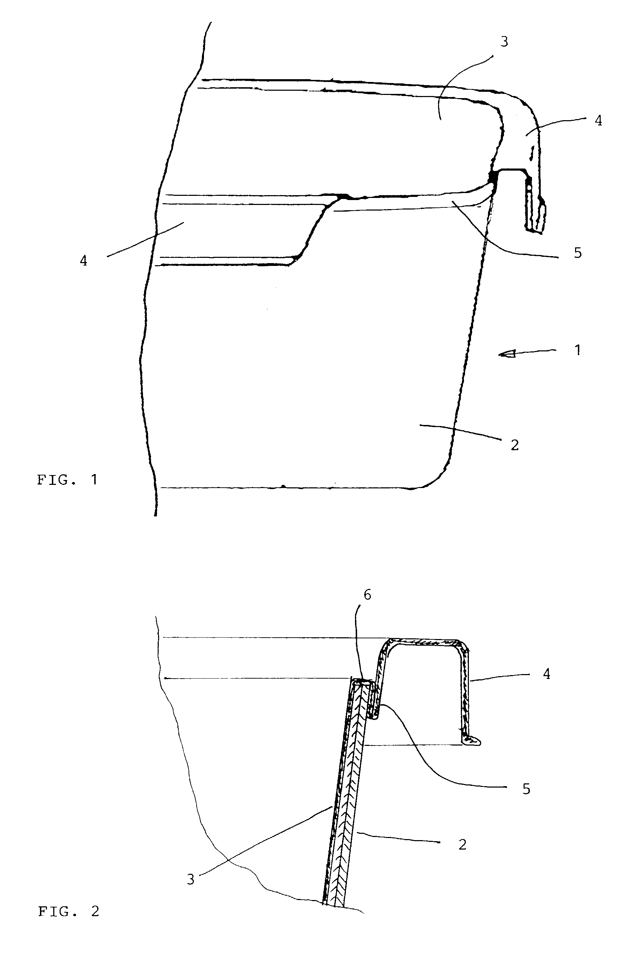

An example of a tub according to the invention is shown in figs. 1 and 2.

The tub 1 comprises a carton container 2 which in a commonly-known manner is produced by being punched out from a sheet of carton, so that the tub bottom and the four sides can be folded to form the outer tub.

The plastic part consists of a lining 3 which extends along the inner sides of the carton tub, as shown in fig. 2.

In addition to constituting this lining, the plastic part also extends around the upper edge 6 of the plastic tub, and some millimeters down in the formation of a foil edge 5, as shown in figs. 1 and 2.

The object of this edge 5 is to hold the folded parts of the carton tub together, so that it remains together without the need for further adhesives or similar means of adherence for the plastic lining 3. As indicated in fig. 2, the carton sides are thus held together in the overlapping position by means of the plastic part.

It will be possible to use a partial foil edge 5, in that this can be limited to extend only over the carton part's overlapped upper edge 6, where the foil edge hereby holds the parts together.

Moreover, the edge areas of the tub are stiffened, hereby ensuring good application characteristics due to the stabilizing of the tub.

The plastic part 3 extends further outwards in the formation of the tub edge 4, which can have a flat upper side against which a not-shown lid can be placed.

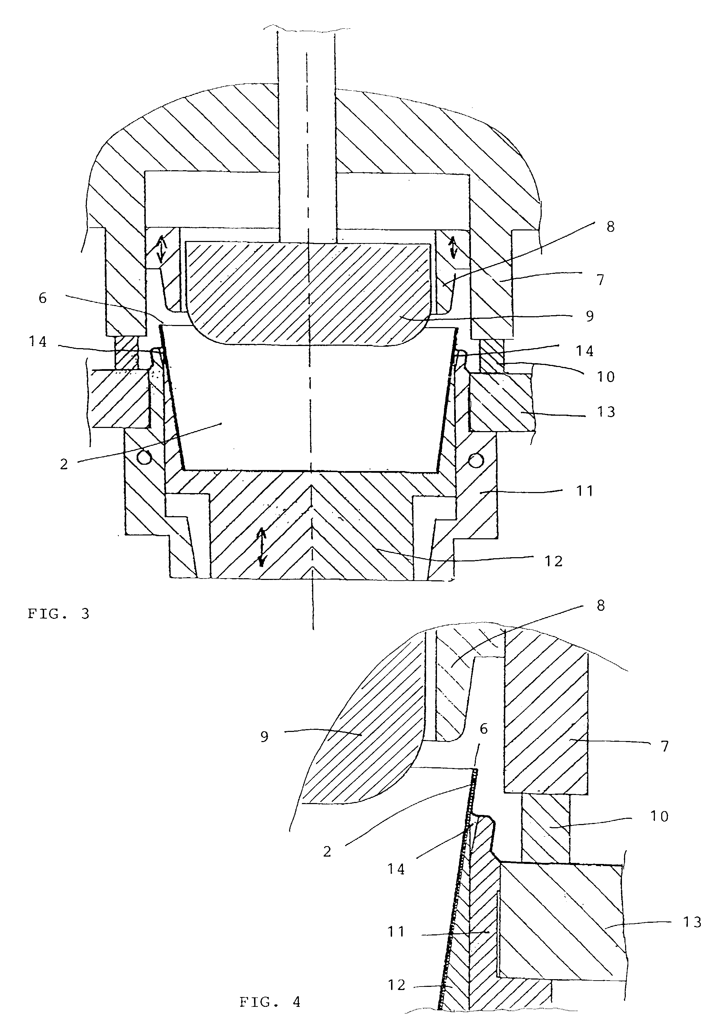

The tub can be produced in the tool shown in figs. 3-6.

This comprises an upper part 7 which on its lower edge bears a sole 10. Internally there is housed a movable top punch 8 for the forming of the edge area 4, and a further inner movably-housed punch 9 for the bending of the carton tub 2 in the lower part.

The interacting lower part comprises the under part 11 which is bevelled at the top to form a cleft 14, as shown in fig. 4.

The tool further comprises a sliding ejector 12 and an outer tearing-off frame 13 which cuts off the foil in the formation of the finished tub.

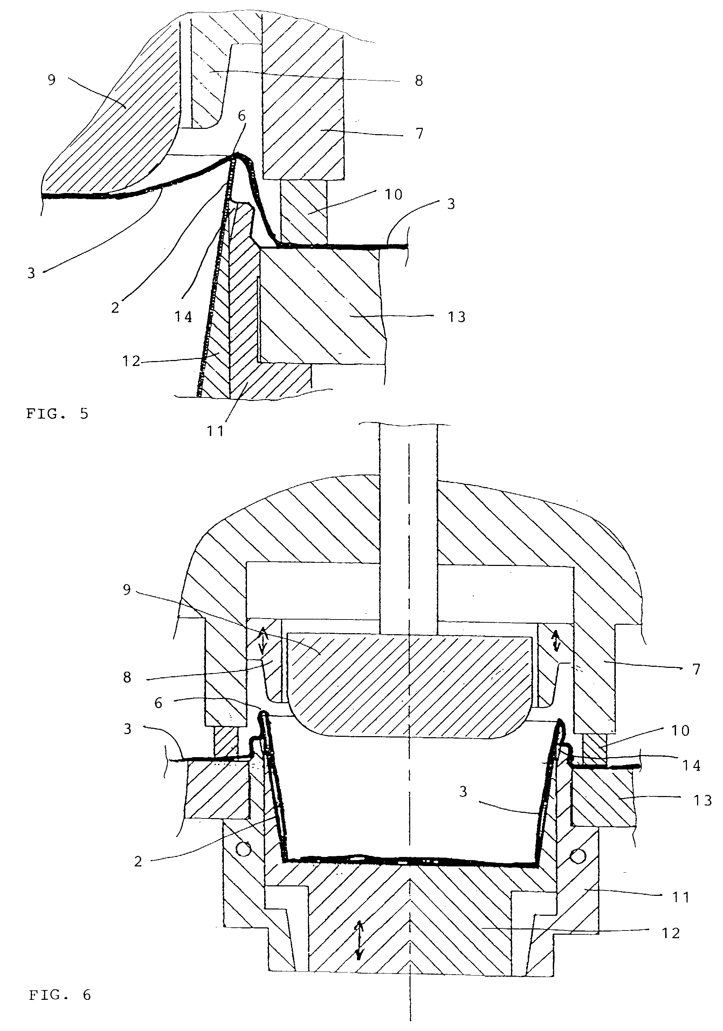

The novelty aspect of the tool is that the cleft 14 enables the foil 3, as shown in figs. 5 and 6, to be folded and formed in such a manner that it will wrap around the upper edge 6 of the carton tub, and herewith form the edge 5 as indicated in fig. 2.

When the ejector 12 is lowered, the foil 3 will be drawn down into the cleft 14 with the carton tub 2 and be folded together, whereby the upper edge of the carton tub is covered with foil while at the same time an external foil edge 5 is formed, which together constitute a bending over of the upper edge of the carton tub, as shown in fig. 2.

This simple method does not entail any unnecessary operations, and thus the bending over can be established without involving any extra production costs.

Moreover, the effect of the bending over of the foil is that the carton part and the plastic part can easily be separated, in that one merely displaces the carton part the few millimeters for the withdrawal from the foil bend, after which the parts are free of each other, and without the inclusion of components other than plastic and carton for reuse.

## Claims

1. Packaging tub comprising an outer carton container and an inner plastic lining, which at the top forms an edge on which a lid can be placed, **characterized** in that the plastic lining (3) extends around the upper edge (6) of the carton tub (2) and a distance (5) down on its outer side.

2. Packaging tub according to claim 1, **characterized** in that the plastic lining (3) consists of a thermoplastic foil which in the heated state spreads out on the inner sides of the carton tub (2) and around the upper edge (6).

3. Packaging tub according to claims 1 and 2, **characterized** in that the plastic lining (3) extends 2-4 millimeters down on the outer side of the carton tub (2) for the formation of the piece (5).

4. Tool for the production of a packaging tub according to the claims 1-3, comprising an upper part and a lower part, **characterized** in that the lower part (11) is configured at the top on the mould side to form a cleft or crevice (14) between the carton tub (2) and the lower part (11, 12).

5. Tool according to claim 4, **characterized** in that the cleft or the crevice (14) is dimensioned to fold and shape the foil (3) on the outer side of the carton tub (2) for the formation of the piece (5).
